# FASCICULE DE BREVET EUROPEEN

(11) **EP 4 423 410 B1**
(45) Date de publication et mention de la délivrance du brevet: **10.12.2025**
(21) Numéro de dépôt: 22813664.4
(22) Date de dépôt: 27.10.2022
(51) Int. Cl.: F16J 3/04, B62D 3/12, F16D 3/84, F16J 3/06, F16J 15/52, F16C 11/06

(54) **SOUFFLET DE DIRECTION**
LENKUNGSBALG
STEERING BELLOWS

(30) Priorité: 28.10.2021 FR 2111448
(43) Date de publication de la demande: 04.09.2024
(73) Titulaire: TRELLEBORG CARQUEFOU, 44470 Carquefou (FR)
(72) Inventeur: MAITAY, Frédéric, 44440 Riaille (FR); BOURBIGOT, Lionel, 44120 Vertou (FR); POULLAOUEC, Jérémy, 44300 Nantes (FR)
(74) Mandataire: Ipsilon
(86) Numéro de dépôt international: PCT/FR2022/052047
(87) Numéro de publication internationale: WO 2023/073326

(56) Documents cités:
- JP-A- 2012 224 274
- JP-A- 2012 240 435
- KR-A- 20130 128 622

## Description

La présente invention concerne un soufflet de direction.

Elle concerne en particulier un soufflet de direction comprenant un manchon délimité par une paroi latérale périphérique, ledit manchon comprenant successivement dans le sens axial, au moins une première extrémité annulaire, dite grande base apte à former une extrémité de fixation du soufflet à un premier élément de direction, tel qu'un boîtier ou carter de direction à protéger, une partie déformable dans le sens d'un allongement ou d'un raccourcissement dudit soufflet formée d'une succession de spires coaxiales, une deuxième extrémité annulaire dite petite base apte à former une extrémité de fixation du soufflet à un deuxième élément de direction, tel qu'une biellette de direction à protéger, ledit manchon comprenant une zone de transition entre la partie déformable et la grande base et présentant, dans la zone de transition, une sortie radiale ménagée dans la paroi latérale périphérique du manchon.

Dans une direction à crémaillère de véhicule automobile, un pignon de direction est lié en rotation avec la colonne de direction, manœuvrée à l'aide du volant de conduite du véhicule, ce pignon venant en prise avec une crémaillère montée coulissante, suivant sa direction longitudinale, dans un carter de direction. Les deux extrémités opposées de la crémaillère, extérieures au carter, sont accouplées à des biellettes de direction associées respectivement aux roues directrices droite et gauche du véhicule, les biellettes assurant la liaison entre la crémaillère et chacun des porte-fusée. Ainsi, la rotation du volant dans un sens ou dans l'autre, donc la rotation correspondante du pignon de direction, est convertie en une translation correspondante de la crémaillère qui, par l'intermédiaire des biellettes et des porte-fusée, provoque elle-même l'orientation des roues du véhicule, pour un braquage à droite ou à gauche.

Dans une telle direction à crémaillère, la liaison articulée entre chaque extrémité de la crémaillère et la biellette correspondante est une liaison à rotule, dite rotule "axiale", réalisée par un boîtier de rotule axiale solidaire de l'extrémité de la crémaillère, et par un pivot de rotule axiale à tête sphérique, solidaire de la biellette et monté tournant en tous sens dans le boîtier de rotule axiale.

Compte tenu de la mobilité de la crémaillère relativement au carter de direction, et de l'orientation variable de la biellette relativement à l'extrémité de la crémaillère, la protection de la direction dans la région de chaque rotule axiale est habituellement assurée par un soufflet, qui relie l'extrémité adjacente du carter de direction à la biellette correspondante, en entourant l'extrémité de la crémaillère (extérieure au carter) et la rotule axiale. Une extrémité annulaire du soufflet est fixée autour de l'extrémité du carter de direction au moyen d'un premier collier d'attache, serré autour de cette extrémité. L'autre extrémité annulaire du soufflet est fixée autour de la biellette, ou du pivot de rotule axiale, au moyen d'un second collier d'attache, serré autour de cette autre extrémité. Ainsi fixé, le soufflet assure l'étanchéité dans l'intervalle entre le carter de direction et la biellette.

Entre ses deux extrémités ainsi attachées, le soufflet possède un certain nombre de spires, qui permettent l'allongement ou le raccourcissement de ce soufflet selon la position de la crémaillère relativement au carter de direction, et qui autorisent aussi une flexion du même soufflet, en fonction de l'orientation variable prise par la biellette grâce à l'articulation à rotule.

Une direction à crémaillère de véhicule automobile est habituellement réalisée de façon totalement étanche, afin d'éviter toute entrée indésirable d'eau ou d'humidité à l'intérieur de la direction.

L'avantage d'une telle direction entièrement manuelle est qu'il est plus aisé en cas de problème, notamment en cas de perte d'étanchéité des soufflets, de détecter l'altération de la direction résultant d'une corrosion. Toutefois, avec le développement des véhicules autonomes et la commande de direction par câble, il n'existe plus nécessairement de liaison mécanique directe entre le volant et le reste de la direction. Il en résulte qu'il est plus difficile de détecter un endommagement de la crémaillère lié à une perte d'étanchéité d'un soufflet. Or, la perte d'étanchéité d'un soufflet doit être détectée très rapidement au risque sinon de détériorer très rapidement le reste de la direction. Il est connu des soufflets disposant d'une sortie radiale fermée par une pièce de fermeture comme l'illustre le document coréen KR1020130128622, selon le préambule de la revendication 1. Il est connu des soufflets logeant au moins un capteur comme l'illustrent les brevets JP 2012 22 4274 et JP 2012 240435. Toutefois, ces capteurs ne donnent pas satisfaction en raison notamment de leur manque de réactivité.

Un but de l'invention est de proposer un soufflet de direction dont la conception permet son adaptation à tout type de direction sans nuire à la possibilité de détecter une éventuelle défaillance en termes d'étanchéité du soufflet.

Un autre but de l'invention est de proposer un soufflet de direction dont la conception permet une détection d'une perte d'étanchéité du soufflet dans un délai très court.

A cet effet, l'invention a pour objet un soufflet de direction comprenant un manchon délimité par une paroi latérale périphérique, ledit manchon comprenant successivement dans le sens axial, au moins une première extrémité annulaire, dite grande base, une partie déformable dans le sens d'un allongement ou d'un raccourcissement dudit soufflet formée d'une succession de spires coaxiales, une deuxième extrémité annulaire dite petite base, ledit manchon comprenant une zone de transition entre la partie déformable et la grande base et présentant, dans la zone de transition, une sortie radiale ménagée dans la paroi latérale périphérique du manchon, caractérisée en ce que la sortie radiale est fermée par un embout tubulaire rapporté sur ladite sortie radiale et présentant une première extrémité raccordée à la sortie radiale et une extrémité opposée fermée, cet embout s'étendant à l'extérieur du manchon, cet embout délimitant intérieurement une cavité logeant au moins un capteur d'étanchéité aux fluides dudit soufflet. L'intégration d'au moins un capteur d'étanchéité aux fluides, c'est-à-dire d'un capteur de détermination d'un paramètre représentatif de l'étanchéité aux fluides, à savoir aux liquides et aux gaz du soufflet, dans un embout tubulaire extérieur au manchon, permet un montage et une maintenance aisés de ce capteur. Par embout extérieur au manchon, on entend un embout qui ne fait pas saillie à l'intérieur du manchon. La première extrémité de l'embout ne s'étend pas en saillie du débouché de la sortie radiale dans le manchon pour faire saillie à l'intérieur du manchon. Ainsi, tout risque que l'embout forme par sa première extrémité, à l'intérieur du manchon, un obstacle à l'écoulement des fluides dans la sortie radiale est évité. La première extrémité de l'embout s'étend au mieux en affleurement du débouché de la sortie radiale dans le manchon. Grâce à cette conception de l'embout extérieur au manchon, l'eau potentiellement présente dans le manchon en raison d'une perte d'étanchéité peut être amenée aisément au niveau du capteur sans avoir à franchir d'obstacle. Par embout extérieur au manchon, on entend un embout qui s'étend en saillie du manchon. La présence d'un tel capteur et sa conception combinées à la conception de l'embout et de la sortie radiale permettent quel que soit le type de direction, la détection rapide et aisée d'une perte d'étanchéité du soufflet. Cette perte d'étanchéité du soufflet ou fuite du soufflet peut être le résultat d'un trou ou simplement d'une porosité résultant de l'usure du soufflet.

Selon un mode de réalisation de l'invention, l'embout est muni d'une collerette périphérique positionnée en applique sur le pourtour de la sortie radiale à l'état couplé de l'embout au manchon. Il en résulte une simplicité de fixation de l'embout et une facilité de réalisation d'un montage étanche entre l'embout et le manchon.

Selon un mode de réalisation de l'invention, le capteur d'étanchéité aux fluides dudit soufflet est un capteur électrique équipé d'au moins un fil électrique et le ou au moins l'un des fils électriques fait saillie de l'embout à travers l'extrémité fermée de l'embout. Cette conception permet un raccordement ultérieur aisé du capteur à une unité de commande.

En variante, le capteur d'étanchéité aux fluides comprend un accumulateur d'énergie, ledit capteur d'étanchéité étant en communication sans fil avec un terminal déporté.

Selon un mode de réalisation de l'invention, l'embout comprend un corps tubulaire ouvert à chacune de ses extrémités et un couvercle de fermeture d'une extrémité du corps pour former l'extrémité fermée de l'embout.

Selon un mode de réalisation de l'invention, le couvercle est au moins encliqueté ou vissé ou collé ou soudé sur le corps et le ou au moins l'un des capteurs est solidaire du couvercle. Cette disposition permet un montage aisé du capteur

Selon un mode de réalisation de l'invention, l'embout est une pièce monolithique monobloc. Cette réalisation permet à nouveau un montage aisé du capteur

Selon un mode de réalisation de l'invention, le ou au moins l'un des capteurs d'étanchéité aux fluides dudit soufflet est un capteur de mesure de concentration en gaz. Cette solution a pour avantage de ne pas être sensible au milieu insalubre de la crémaillère et permet de suivre en continu une éventuelle fuite du soufflet.

Selon un mode de réalisation de l'invention, le ou au moins l'un des capteurs d'étanchéité aux fluides dudit soufflet est un capteur de détection de liquide. Cette conception permet une simplicité de mise en œuvre.

Selon un mode de réalisation de l'invention, le ou au moins l'un des capteurs d'étanchéité aux fluides dudit soufflet est un capteur de pression ou un capteur de débit.

Le ou au moins l'un des capteurs d'étanchéité aux fluides dudit soufflet peut donc être choisi parmi les capteurs comprenant les capteurs de mesure de concentration en gaz, les capteurs de détection de liquide, les capteurs de pression, les capteurs de débit.
Selon un mode de réalisation de l'invention, l'embout est fixé par surmoulage à la sortie radiale.
Selon un mode de réalisation de l'invention, la paroi latérale périphérique du manchon est munie, côté face interne tournée vers l'intérieur du manchon, d'une gorge circonférentielle interne débouchant dans la sortie radiale du manchon. La présence de cette gorge permet de former un guide d'écoulement des fluides en direction de la sortie radiale.
Selon un mode de réalisation de l'invention, la gorge circonférentielle interne s'étend sur une partie du pourtour interne du manchon.

### Brève description des dessins

L'invention sera bien comprise à la lecture de la description suivante d'exemples de réalisation, en référence aux dessins annexés dans lesquels :
[Fig. 1] représente une vue schématique d'une direction ;
[Fig. 2] représente une vue schématique en coupe d'un soufflet à l'état couplé à des éléments d'une direction ;
[Fig. 3] représente une vue schématique d'un soufflet conforme à l'invention ;
[Fig. 4] représente une vue de détail de l'embout de la figure 3 ;
[Fig. 5] représente vue schématique d'un soufflet conforme à l'invention ;
[Fig. 6] représente une vue de détail de l'embout de la figure 5 ;

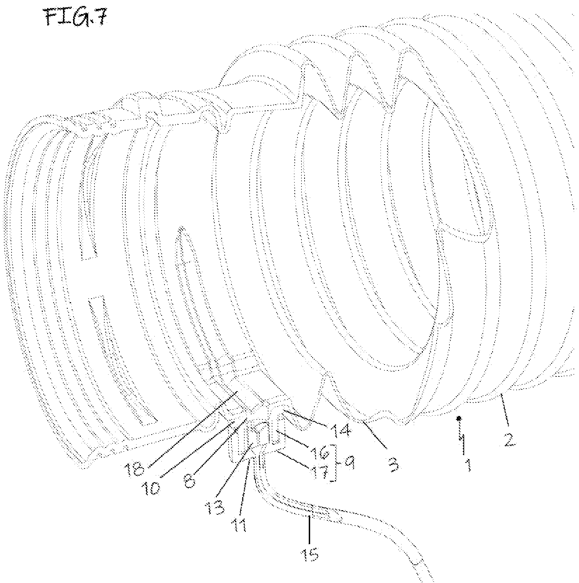

[Fig. 7] représente une vue partielle d'un soufflet dont le manchon est équipé d'une gorge périphérique interne ;

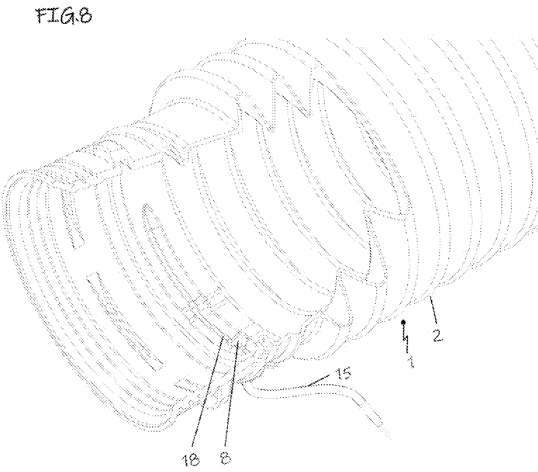

[Fig. 8] représente une vue partielle d'un soufflet dont le manchon est équipé d'une gorge périphérique interne.

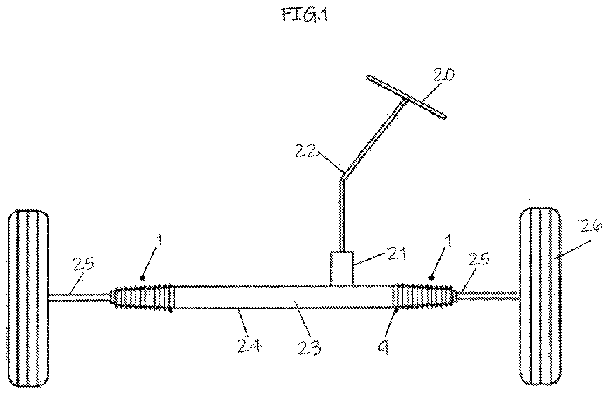

Comme mentionné ci-dessus, l'invention concerne un soufflet 1 de direction pouvant être intégré dans une direction du type de celle représentée à la figure 1 qui est une direction à crémaillère pour véhicule automobile.

Dans cette direction, la colonne 22 de direction est manœuvrée à l'aide d'un volant 20. Cette colonne 22 de direction est solidaire en rotation d'un pignon 21 qui vient en prise avec une crémaillère 23 montée coulissante suivant sa direction longitudinale, dans un carter 24 de direction.

Les deux extrémités de la crémaillère 23 extérieures au carter 24 sont accouplées à des biellettes 25 de direction associées respectivement aux roues 26 directrices droite et gauche du véhicule.

Ainsi, la rotation du volant dans un sens ou dans l'autre, donc la rotation correspondante du pignon de direction est convertie en une translation correspondante de la crémaillère qui, par l'intermédiaire des biellettes et des porte-fusées, provoque elle-même l'orientation des roues du véhicule pour un braquage à droite ou à gauche.

Dans une telle direction à crémaillère, la liaison articulée entre chaque extrémité de la crémaillère 23 et la biellette 25 correspondante est une liaison à rotule dite rotule axiale, réalisée par un boîtier de rotule axiale solidaire de l'extrémité de la crémaillère 23 et par un pivot de rotule axiale à tête sphérique solidaire de la biellette 25 et monté tournant en tout sens dans le boîtier de rotule axiale.

Le soufflet 1 de direction comprend un manchon 2 délimité par une paroi 3 latérale périphérique. Le manchon 2 est de préférence de forme cylindro-conique. Ce manchon 2, qui est réalisé en matière de synthèse, généralement par injection ou soufflage, comprend successivement, dans le sens axial, au moins une première extrémité annulaire dite grande base 4 apte à former une extrémité de fixation du soufflet 1 à un premier élément de direction, tel que le boîtier ou carter 24 de direction à protéger, une partie 5 déformable dans le sens d'un allongement ou d'un raccourcissement du soufflet 1 formé d'une succession de spires coaxiales, une deuxième extrémité annulaire dite petite base 6 apte à former une extrémité de fixation du soufflet 1 à un deuxième élément de direction, tel qu'une biellette 25 de direction à protéger. Le manchon 2 comprend encore une zone 7 de transition entre la partie 5 déformable et la grande base 4.

Compte tenu de la mobilité de la crémaillère 23 relativement au carter 24 de direction et de l'orientation variable de la biellette 25 relativement à l'extrémité de la crémaillère 23, la protection de la direction dans la région de chaque rotule axiale est donc assurée par le soufflet 1 qui relie l'extrémité adjacente du carter 24 de direction à la biellette 25 correspondante en entourant l'extrémité de la crémaillère (extérieure au carter) et la rotule axiale.

La grande base 4 du soufflet 1 est fixée autour de l'extrémité du carter 24 de direction au moyen d'un premier collier d'attache serré autour de cette extrémité. La petite base 6 du soufflet 1 est fixée autour de la biellette 25 ou du pivot de rotule axiale au moyen d'un second collier d'attache serré autour de cette petite base 6.

La partie 5 déformable du soufflet 1 de direction permet l'allongement ou le raccourcissement de ce soufflet selon la position de la crémaillère 23 relativement au carter 24 de direction.

Le manchon 2 présente dans la zone de transition 7 une sortie 8 radiale ménagée dans la paroi 3 latérale périphérique du manchon 2. Cette sortie 8 radiale est fermée par un embout 9 tubulaire rapporté sur ladite sortie radiale 8.

Cet embout 9 tubulaire présente une première extrémité 10 raccordée à la sortie 8 radiale et une extrémité opposée fermée 11. L'extrémité fermée de l'embout 9 tubulaire constitue de préférence le point bas du soufflet à l'état monté du soufflet dans une direction. Cet embout 9 s'étend à l'extérieur du manchon 2 sans faire saillie à l'intérieur du manchon Cet embout 9 ne s'étend pas à l'intérieur du manchon au-delà du débouché de la sortie 8 radiale à l'intérieur du manchon. Cet embout 9 est ainsi dans l'impossibilité de former un obstacle à l'écoulement de fluide à l'intérieur de la sortie 8 radiale. Cet embout 9 peut être droit comme dans l'exemple représenté ou coudé ou présenter tout autre type de forme sans sortir de l'invention. Cet embout 9 délimite intérieurement une cavité 12 logeant au moins un capteur 13 de détermination d'un paramètre représentatif de l'étanchéité aux fluides dudit soufflet 1.

Ce ou ces capteurs 13 d'étanchéité permettent de détecter une fuite du soufflet. En effet, une direction à crémaillère de véhicule automobile est habituellement réalisée de façon totalement étanche afin d'éviter toute entrée indésirable d'eau ou d'humidité à l'intérieur de la direction.

Comme mentionné ci-dessus, l'embout 9 peut affecter un grand nombre de formes.

Indépendamment de son mode de réalisation, l'embout 9 est muni d'une collerette 14 périphérique positionnée en applique sur le pourtour de la sortie 8 radiale du manchon à l'état couplé de l'embout 9 au manchon 2.

Le maintien en applique s'opère par surmoulage, au moment de la fabrication du manchon 2 lorsque l'embout 9 est un insert positionné dans le moule de fabrication du soufflet. Bien évidemment, d'autres modes de réalisation du couplage de l'embout 9 au manchon 2 peuvent être réalisés. Ainsi, un encliquetage, un collage, ou une soudure ou autre peut être envisagé.

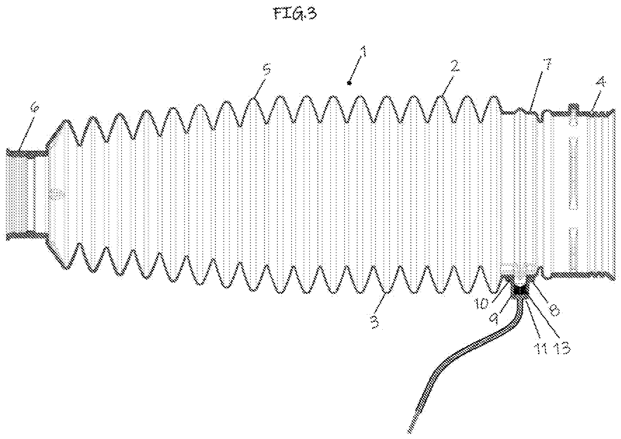

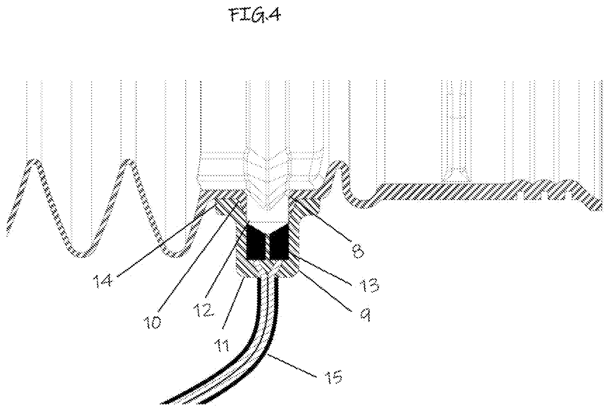

Dans l'exemple représenté aux figures 3 et 4, l'embout 9 est une pièce monobloc monolithique. Le capteur 13 d'étanchéité aux fluides, c'est-à-dire aux gaz et aux liquides du soufflet 1 est donc prépositionné dans la cavité 10 de l'embout 9 et l'embout 9 est ensuite fixé au manchon 2.

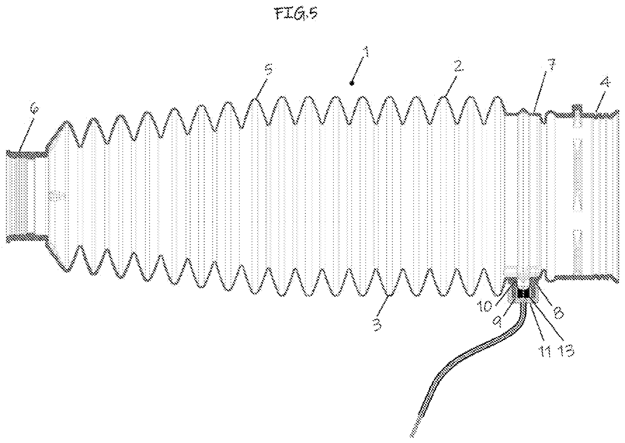

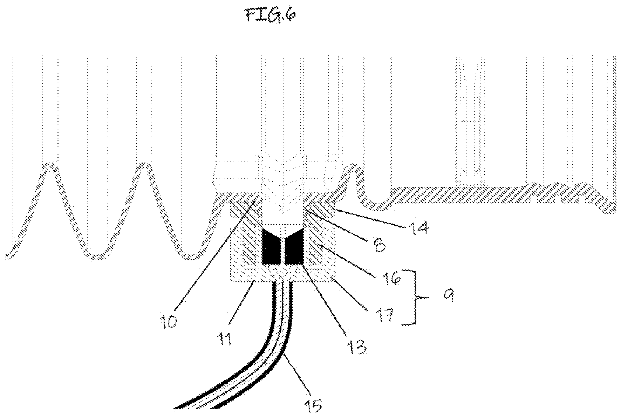

Dans l'exemple représenté aux figures 5 et 6, l'embout 9 comprend un corps 16 tubulaire ouvert à chacune de ses extrémités et un couvercle 17 de fermeture d'une extrémité du corps 16 pour former l'extrémité fermée 11 de l'embout 9.

Ce couvercle 17 peut être encliqueté ou vissé ou collé ou soudé sur le corps 16.

Le ou au moins l'un des capteurs 13 est de préférence solidaire du couvercle 17. Dans le cas d'un encliquetage, il est particulièrement aisé de changer le capteur 13 en cas de défaillance.

Dans ce mode de réalisation, le corps 16 de l'embout 9 et le manchon 2 peuvent être préassemblés par soudure lors de la fabrication du manchon, puis le capteur 13 d'étanchéité aux fluides solidarisé au couvercle 17 est installé par simple fixation du couvercle 17 au corps 16.

Dans les exemples représentés, le capteur 13 d'étanchéité aux fluides dudit soufflet est un capteur électrique équipé d'au moins un fil 15 électrique et le ou au moins l'un des fils 15 électriques fait saillie de l'embout 9 à travers l'extrémité fermée 11 de l'embout 9.

Ce ou ces fils permettent le raccordement du ou des capteurs à une unité de commande non représentée.

Ladite unité de commande se présente sous la forme d'un système électronique et informatique qui comprend par exemple un microprocesseur et une mémoire de travail. Selon un aspect particulier, l'unité de commande peut se présenter sous la forme d'un automate programmable.

Autrement dit, les fonctions et étapes décrites peuvent être mises en œuvre sous forme de programme informatique ou via des composants matériels (p. ex. des réseaux de portes programmables). En particulier, les fonctions et étapes opérées par l'unité de pilotage ou ses modules peuvent être réalisées par des jeux d'instructions ou modules informatiques implémentés dans un processeur ou contrôleur ou être réalisées par des composants électroniques dédiés ou des composants de type circuit logique programmable (ou FPGA qui est l'acronyme de l'anglais field-programmable gate array , ce qui correspond littéralement à réseau de portes programmable in-situ) ou de type circuit intégré propre à une application (ou ASIC qui est l'acronyme de l'anglais application-specific integrated circuit, ce qui correspond littéralement à circuit intégré spécifique à une application ). Il est aussi possible de combiner des parties informatiques et des parties électroniques.

Lorsqu'il est précisé que l'unité ou des moyens ou modules de ladite unité sont configurés pour réaliser une opération donnée, cela signifie que l'unité comprend des instructions informatiques et les moyens d'exécution correspondants qui permettent de réaliser ladite opération et/ou que l'unité comprend des composants électroniques correspondants.

Le ou les capteurs 13 d'étanchéité aux fluides, c'est-à-dire aux liquides et aux gaz du soufflet peuvent également affecter un grand nombre de formes.

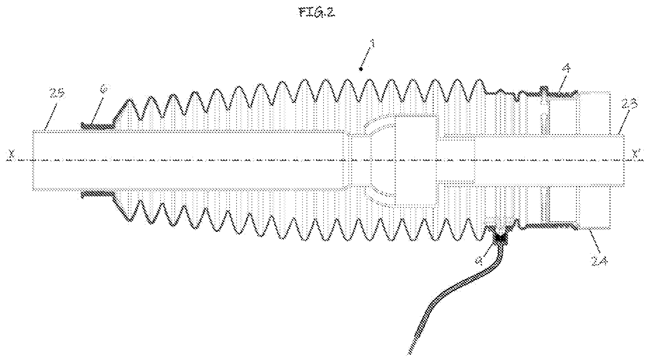

Ainsi, le ou au moins l'un des capteurs 13 d'étanchéité aux fluides du soufflet 1 peut être un capteur de détection de liquide, en particulier d'eau. Dans ce cas, l'embout 9 forme le point bas du soufflet, à l'état positionné du soufflet sur la direction. Le soufflet s'étend avec l'axe longitudinal du manchon représenté en XX' à la figure 2 disposé à l'horizontale. Le point bas du soufflet est formé par l'embout 9 avec le capteur 13, de sorte que lorsque le soufflet n'est plus étanche, de l'eau est apte à rentrer dans le soufflet et à venir par gravité se positionner dans l'embout. Cette eau peut également être le résultat d'une condensation de l'humidité à l'intérieur du soufflet.

La présence de cette eau est détectée par le capteur 13. Cette information est transmise à l'unité de commande, qui peut alors émettre un signal de commande d'un dispositif d'alerte tel qu'un dispositif d'émission d'un signal sonore ou lumineux.

En variante ou en complément, le ou au moins l'un des capteurs 13 d'étanchéité aux fluides du soufflet 1 peut être un capteur de mesure de concentration en gaz. Dans ce mode de réalisation, un gaz peut être introduit dans le soufflet lors du montage du soufflet sur le reste de la direction.

La présence de ce gaz peut être mesurée en temps réel en continu par le capteur 13. En cas de fuite du soufflet, une chute de la concentration de gaz est observée, par comparaison avec une valeur prédéterminée. En cas de problème, à nouveau l'unité de commande à laquelle les signaux du capteur 13 sont adressés peut émettre un signal de commande d'un dispositif d'alerte.

Le capteur 13 de concentration en gaz peut être un capteur de mesure de monoxyde de carbone (CO) dans l'air. Ce capteur de mesure de CO dans l'air peut être un capteur infrarouge, ou intégrer un réactif chimique de manière en soi connue.

Bien évidemment, la concentration d'autres gaz, tels que l'oxygène ou l'azote, peuvent également être mesurés sans sortir du cadre de l'invention.

En variante ou en complément, le ou au moins l'un des capteurs 13 d'étanchéité aux fluides du soufflet 1 peut être un capteur de pression. Le soufflet est raccordé à une source de pression. Une mesure de fuite par perte de pression est mesurée. Cette solution n'est pas préférée, car elle nécessite une phase expérimentale conséquente.

En variante ou en complément, le ou l'un des capteurs 13 d'étanchéité peut être un capteur de débit. Dans ce mode de réalisation, on injecte un débit d'air dans le soufflet et on mesure la perte de débit au niveau de la sortie radiale. À nouveau, cette solution n'est pas préférée, car elle nécessite une phase expérimentale conséquente.

Pour parfaire le soufflet, la paroi 3 latérale périphérique du manchon 2 peut être munie, côté face interne tournée vers l'intérieur du manchon 2, d'une gorge 18 circonférentielle interne débouchant dans la sortie (8) radiale du manchon 2. Cette gorge 18 permet de guider les fluides dont la présence résulte d'une perte d'étanchéité vers la sortie 8 radiale pour les amener au contact du capteur. A nouveau cette disposition permet d'accroitre la vitesse de réactivité du capteur. Dans l'exemple représenté, la gorge 18 circonférentielle interne s'étend sur une partie du pourtour interne du manchon 2. Bien évidemment, cette gorge 18 périphérique interne aurait pu s'étendre sur toute la circonférence intérieure du manchon sans sortir du cadre de l'invention.

## Revendications

1. Soufflet (1) de direction comprenant un manchon (2) délimité par une paroi (3) latérale périphérique, ledit manchon (2) comprenant successivement dans le sens axial, au moins une première extrémité annulaire, dite grande base (4), une partie (5) déformable dans le sens d'un allongement ou d'un raccourcissement dudit soufflet (1) formée d'une succession de spires coaxiales et une deuxième extrémité annulaire dite petite base (6), ledit manchon (2) comprenant une zone (7) de transition entre la partie (5) déformable et la grande base (4), et présentant, dans la zone (7) de transition, une sortie (8) radiale ménagée dans la paroi (3) latérale périphérique du manchon (2), ladite sortie (8) radiale étant fermée par un embout (9) tubulaire rapporté sur ladite sortie (8) radiale et présentant une première extrémité (10) raccordée à la sortie (8) radiale et une extrémité opposée fermée (11), cet embout (9) s'étendant à l'extérieur du manchon (2), cet embout (9) délimitant intérieurement une cavité (12) **caractérisée en ce que** ladite cavité (12) loge au moins un capteur (13) d'étanchéité aux fluides dudit soufflet.

2. Soufflet (1) de direction selon la revendication 1, **caractérisé en ce que** l'embout (9) est muni d'une collerette (14) périphérique positionnée en applique sur le pourtour de la sortie (8) radiale à l'état couplé de l'embout (9) au manchon (2).

3. Soufflet (1) de direction selon l'une des revendications 1 ou 2, **caractérisé en ce que** le capteur (13) d'étanchéité aux fluides dudit soufflet est un capteur électrique équipé d'au moins un fil (15) électrique et **en ce que** le ou au moins l'un des fils (15) électriques fait saillie de l'embout (9) à travers l'extrémité fermée (11) de l'embout (9).

4. Soufflet (1) de direction selon l'une des revendications 1 à 3, **caractérisé en ce que** l'embout (9) comprend un corps (16) tubulaire ouvert à chacune de ses extrémités et un couvercle (17) de fermeture d'une extrémité du corps (16) pour former l'extrémité fermée (11) de l'embout (9).

5. Soufflet (1) de direction selon la revendication 4, **caractérisé en ce que** le couvercle (17) est au moins encliqueté ou vissé ou collé ou soudé sur le corps (16) et **en ce que** le ou au moins l'un des capteurs (13) est solidaire du couvercle (17).

6. Soufflet (1) de direction selon l'une des revendications 1 à 3, **caractérisé en ce que** l'embout (9) est une pièce monolithique monobloc.

7. Soufflet (1) de direction selon l'une des revendications 1 à 6, **caractérisé en ce que** le ou au moins l'un des capteurs (13) d'étanchéité aux fluides dudit soufflet (1) est un capteur de mesure de concentration en gaz.

8. Soufflet (1) de direction selon l'une des revendications 1 à 7, **caractérisé en ce que** le ou au moins l'un des capteurs (13) d'étanchéité aux fluides dudit soufflet (1) est un capteur de détection de liquide.

9. Soufflet (1) de direction selon l'une des revendications 1 à 8, **caractérisé en ce que** le ou au moins l'un des capteurs (13) d'étanchéité aux fluides dudit soufflet (1) est un capteur de pression ou un capteur de débit.

10. Soufflet (1) de direction selon l'une des revendications 1 à 9, **caractérisé en ce que** l'embout (9) est fixé par surmoulage à la sortie (8) radiale.

11. Soufflet (1) de direction selon l'un des revendications 1 à 10, **caractérisé en ce que** la paroi (3) latérale périphérique du manchon (2) est munie, côté face interne tournée vers l'intérieur du manchon (2), d'une gorge (18) circonférentielle interne débouchant dans la sortie (8) radiale du manchon (2).

12. Soufflet (1) de direction selon la revendication 11, **caractérisé en ce que** la gorge (18) circonférentielle interne s'étend sur une partie du pourtour interne du manchon (2).

## Patentansprüche

1. Lenkungsbalg (1), welcher eine Muffe (2) umfasst, die die von einer Umfangsseitenwand (3) begrenzt wird, wobei die Muffe (2) in der axialen Richtung nacheinander mindestens ein erstes ringförmiges Ende, große Basis (4) genannt, einen in der Richtung einer Verlängerung oder einer Verkürzung des Balges (1) verformbaren Teil (5), der von einer Aufeinanderfolge von koaxialen Windungen gebildet wird, und ein zweites ringförmiges Ende, kleine Basis (6) genannt, umfasst, wobei die Muffe (2) einen Übergangsbereich (7) zwischen dem verformbaren Teil (5) und der großen Basis (4) umfasst und in dem Übergangsbereich (7) einen radialen Ausgang (8) aufweist, der in der Umfangsseitenwand (3) der Muffe (2) ausgebildet ist, wobei der radiale Ausgang (8) durch rohrförmiges Ansatzstück (9) verschlossen ist, das an den radialen Ausgang (8) angesetzt ist und ein an den radialen Ausgang (8) angeschlossenes erstes Ende (10) und ein geschlossenes gegenüberliegendes Ende (11) aufweist, wobei sich dieses Ansatzstück (9) außerhalb der Muffe (2) erstreckt, wobei dieses Ansatzstück (9) innen einen Hohlraum (12) begrenzt, **dadurch gekennzeichnet, dass** der Hohlraum (12) mindestens einen Sensor (13) für die Fluiddichtheit des Balges aufnimmt.

2. Lenkungsbalg (1) nach Anspruch 1, **dadurch gekennzeichnet, dass** das Ansatzstück (9) mit einem umlaufenden Kragen (14) ausgestattet ist, der im an die Muffe (2) angekoppelten Zustand des Ansatzstücks (9) am Umfangsrand des radialen Ausgangs (8) anliegend positioniert ist.

3. Lenkungsbalg (1) nach einem der Ansprüche 1 oder 2, **dadurch gekennzeichnet, dass** der Sensor (13) für die Fluiddichtheit des Balges ein elektrischer Sensor ist, der mit mindestens einem Stromkabel (15) ausgestattet ist, und dadurch, dass das oder mindestens eines der Stromkabel (15) aus dem Ansatzstück (9) durch das geschlossene Ende (11) des Ansatzstücks (9) hindurch herausragt.

4. Lenkungsbalg (1) nach einem der Ansprüche 1 bis 3, **dadurch gekennzeichnet, dass** das Ansatzstück (9) einen an jedem seiner Enden offenen rohrförmigen Körper (16) und einen Deckel (17) zum Verschließen eines Endes des Körpers (16), um das geschlossene Ende (11) des Ansatzstücks (9) zu bilden, umfasst.

5. Lenkungsbalg (1) nach Anspruch 4, **dadurch gekennzeichnet, dass** der Deckel (17) mindestens am Körper (16) eingerastet oder an ihn angeschraubt oder angeklebt oder angeschweißt ist, und dadurch, dass der oder mindestens einer der Sensoren (13) mit dem Deckel (17) fest verbunden ist.

6. Lenkungsbalg (1) nach einem der Ansprüche 1 bis 3, **dadurch gekennzeichnet, dass** das Ansatzstück (9) ein einstückiges monolithisches Teil ist.

7. Lenkungsbalg (1) nach einem der Ansprüche 1 bis 6, **dadurch gekennzeichnet, dass** der oder mindestens einer der Sensoren (13) für die Fluiddichtheit des Balges (1) ein Sensor zur Messung der Gaskonzentration ist.

8. Lenkungsbalg (1) nach einem der Ansprüche 1 bis 7, **dadurch gekennzeichnet, dass** der oder mindestens einer der Sensoren (13) für die Fluiddichtheit des Balges (1) ein Sensor zur Detektion von Flüssigkeit ist.

9. Lenkungsbalg (1) nach einem der Ansprüche 1 bis 8, **dadurch gekennzeichnet, dass** der oder mindestens einer der Sensoren (13) für die Fluiddichtheit des Balges (1) ein Drucksensor oder ein Durchflusssensor ist.

10. Lenkungsbalg (1) nach einem der Ansprüche 1 bis 9, **dadurch gekennzeichnet, dass** das Ansatzstück (9) durch Aufformen am radialen Ausgang (8) befestigt ist.

11. Lenkungsbalg (1) nach einem der Ansprüche 1 bis 10, **dadurch gekennzeichnet, dass** die Umfangsseitenwand (3) der Muffe (2) auf der Seite der Innenfläche, die dem Inneren der Muffe (2) zugewandt ist, mit einer inneren umlaufenden Rille (18) ausgestattet ist, die in den radialen Ausgang (8) der Muffe (2) mündet.

12. Lenkungsbalg (1) nach Anspruch 11, **dadurch gekennzeichnet, dass** sich die innere umlaufende Rille (18) auf einem Teil des inneren Umfangs der Muffe (2) erstreckt.

## Claims

1. A steering bellows (1) comprising a sleeve (2) delimited by a peripheral lateral wall (3), said sleeve (2) comprising, in succession in the axial direction, at least one first annular end, called large base (4), a part (5) that is deformable in the direction of an elongation or of a shortening of said bellows (1) formed by a succession of coaxial turns and a second annular end, called small base (6), said sleeve (2) comprising a transition zone (7) between the deformable part (5) and the large base (4), and having, in the transition zone (7), a radial output (8) formed in the peripheral lateral wall (3) of the sleeve (2), the radial output (8) being closed by a tubular end connector (9) added onto said radial output (8) and having a first end (10) connected to the radial output (8) and a closed opposite end (11), this end connector (9) extending outside of the sleeve (2), this end connector (9) internally delimiting a cavity (12), **characterized in that** said cavity (12) houses at least one sensor (13) of fluid-tightness of said bellows.

2. The steering bellows (1) as claimed in claim 1, **characterized in that** the end connector (9) is provided with a peripheral flange (14) positioned pressed onto the perimeter of the radial output (8) when the end connector (9) is in the state coupled to the sleeve (2).

3. The steering bellows (1) as claimed in one of claims 1 and 2, **characterized in that** the sensor (13) of fluid-tightness of said bellows is an electrical sensor equipped with at least one electrical wire (15) and **in that** the or at least one of the electrical wires (15) protrudes from the end connector (9) through the closed end (11) of the end connector (9).

4. The steering bellows (1) as claimed in one of claims 1 to 3, **characterized in that** the end connector (9) comprises a tubular body (16) that is open at each of its ends and a cover (17) for closure of one end of the body (16) to form the closed end (11) of the end connector (9).

5. The steering bellows (1) as claimed in claim 4, **characterized in that** the cover (17) is at least snap-fitted or screwed or glued or welded onto the body (16) and **in that** the or at least one of the sensors (13) is secured to the cover (17).

6. The steering bellows (1) as claimed in one of claims 1 to 3, **characterized in that** the end connector (9) is a one-piece monolithic part.

7. The steering bellows (1) as claimed in one of claims 1 to 6, **characterized in that** the or at least one of the sensors (13) of fluid-tightness of said bellows (1) is a gas concentration measurement sensor.

8. The steering bellows (1) as claimed in one of claims 1 to 7, **characterized in that** the or at least one of the sensors (13) of fluid-tightness of said bellows (1) is a liquid detection sensor.

9. The steering bellows (1) as claimed in one of claims 1 to 8, **characterized in that** the or at least one of the sensors (13) of fluid-tightness of said bellows (1) is a pressure sensor or a flow rate sensor.

10. The steering bellows (1) as claimed in one of claims 1 to 9, **characterized in that** the end connector (9) is fixed by overmolding to the radial output (8).

11. The steering bellows (1) as claimed in one of claims 1 to 10, **characterized in that** the peripheral lateral wall (3) of the sleeve (2) is provided, on the inner face side turned toward the interior of the sleeve (2), with an internal circumferential groove (18) emerging in the radial output (8) of the sleeve (2).

12. The steering bellows (1) as claimed in claim 11, **characterized in that** the internal circumferential groove (18) extends over a part of the inner perimeter of the sleeve (2).
